# EUROPÄISCHE PATENTSCHRIFT

(11) **EP 3 194 804 B1**
(45) Veröffentlichungstag und Bekanntmachung des Hinweises auf die Patenterteilung: **06.11.2019**
(21) Anmeldenummer: 15763038.5
(22) Anmeldetag: 16.09.2015
(51) Int. Cl.: F16D 65/14, F16D 65/18

(54) **SCHEIBENBREMSE FÜR EIN NUTZFAHRZEUG**
DISK BRAKE FOR A UTILITY VEHICLE
FREIN À DISQUE POUR VÉHICULE UTILITAIRE

(30) Priorität: 17.09.2014 DE 102014113370
(43) Veröffentlichungstag der Anmeldung: 26.07.2017
(73) Patentinhaber: KNORR-BREMSE Systeme für Nutzfahrzeuge GmbH, 80809 München (DE)
(72) Erfinder: ADAMCZYK, Philipp, 87677 Stöttwang (DE); SCHEUFLER, Christian, 80807 München (DE); KLINGNER, Matthias, 82272 Moorenweis (DE)
(86) Internationale Anmeldenummer: PCT/EP2015/071261
(87) Internationale Veröffentlichungsnummer: WO 2016/042046

(56) Entgegenhaltungen:
- EP-A1- 2 428 695
- WO-A1-2006/024512
- KR-A- 20130 135 203

## Beschreibung

Die Erfindung betrifft eine Scheibenbremse für ein Nutzfahrzeug gemäß dem Oberbegriff des Anspruchs 1 sowie einen Bremssattel einer Scheibenbremse.

Derartige Scheibenbremsen sind hinlänglich bekannt. Beispielhaft sei die DE 195 15 063 C1 genannt, in der eine gattungsgemäße Axial-Scheibenbremse offenbart ist, bei der bei einer Bremsung ein Bremshebel einer Zuspanneinrichtung auf eine Brücke einwirkt, in der zwei parallel und abständig zueinander angeordnete Bremsstempel gelagert sind, die jeweils ein Druckstück aufweisen. Ein Hebelarm des Bremshebels ragt dabei in einen an einen Bremssattel angeformten Dom.

Ein an den Druckstücken anliegender Bremsbelag wird bei der Bremsung an eine Bremsscheibe gedrückt, wozu der Bremshebel mittels eines pneumatisch oder elektromechanisch betätigbaren Stößels verschwenkt wird, so dass über einen am Bremshebel angeschlossenen, sich an der Brücke abstützenden Exzenter die Brücke mit den Druckstempeln in Richtung der Bremsscheibe verschoben wird.

Gegenüberliegend stützt sich der Bremshebel in einer Gleitlagerung ab, die an einer Innenseite der Wand des Bremssattels, einen Sattelkopf bildend, vorgesehen ist, wobei die Wand einen Aufnahmeraum für die Zuspanneinrichtung bildet, die durch eine der Wand gegenüberliegende Montageöffnung eingesetzt ist. Der Dom, in den der sich quer zur Zuspannrichtung erstreckende Hebelarm des Bremshebels ragt, ist bei dem aus Gusseisen bestehenden, einstückigen Bremssattel angeformt.

Die wandseitige Gleitlagerung weist eine Aufnahme auf, die rinnenförmig und im Querschnitt kreisbogenförmig ausgebildet ist und sich quer zur Schwenkrichtung erstreckt.

In dieser Aufnahme, die bevorzugt mit einer Lagerschale ausgekleidet ist, ist ein Schwenkkörper positioniert, der als separate Wälzrolle ausgebildet sein kann oder als ein an den Bremshebel angeformter Wulst, der zumindest über den Schwenkbereich, entsprechend der Krümmung der Aufnahme, kreisbogenförmig gestaltet ist.

Eine Aufnahme ist dabei in den Sattelkopf eingebracht, wozu im Bremssattel eine seitliche Bearbeitungsöffnung vorgesehen ist, durch die ein Bearbeitungswerkzeug, beispielsweise ein Fräser, einführbar ist.

Für eine lagegenaue Verschiebung der Brücke ist eine exakte Positionierung des Bremshebels erforderlich, die bei der bislang bekannten Konstruktion jedoch nicht gewährleistet ist, sondern bestenfalls rein zufällig und nicht dauerhaft.

Naturgemäß können sich dadurch hinsichtlich der Betriebssicherheit der Zuspanneinrichtung Probleme ergeben, da eine geringe Verschiebung des Bremshebels quer zur Schwenkrichtung zu einem veränderten Angriff an der Brücke führt, der deren Betriebsverhalten nachteilig beeinflusst.

Darüber hinaus besteht die Gefahr einer unkontrollierten Beanspruchung beteiligter Bauteile, die letztendlich Einfluss auf die Standzeit haben, d.h. die Standzeit wird gegenüber einer dauerhaft exakten Führung reduziert.

Der DE 10 2012 108 689 A1 ist eine Radial-Scheibenbremse entnehmbar, bei der ein Hebelarm des Bremshebels sich etwa parallel zur Drehachse der Bremsscheibe erstreckt. Zur Verschiebesicherung des Bremshebels sind beidseitig an einem Schwenkkörper, der als Wälzrolle ausgebildet ist, Sicherungselemente befestigt, von denen eines als Schaltgabel ausgebildet ist, die mit einer Nachstelleinrichtung in Wirkverbindung steht, während das andere Sicherungselement aus einem Halteblech gebildet ist.

Beide Sicherungselemente stützen sich sowohl am Bremshebel wie auch an einem Sattelkopf des Bremssattels ab, so dass der Schwenkkörper ebenso wie der Bremshebel quasi eingespannt sind. Nachteilig hierbei ist jedoch, dass beide Sicherungselemente mit einer relativ großen Anlagefläche am Sattelkopf anliegen, so dass bei der Verschwenkung des Bremshebels entsprechende Reibungskräfte überwunden werden müssen.

Aus der DE 10 2012 108 670 A1 ist es bekannt zur Verschiebesicherung des Bremshebels außerhalb einer bremssattelseitigen Lagerung am Hebelarm des Bremshebels anliegende Passstifte vorzusehen, zwischen denen der Hebelarm geführt ist.

In der WO 2006/024512 A1 ist eine Scheibenbremse offenbart, bei der der Schwenckörper in Form einer Wälzrolle mittels eines am Bremshebel befestigten Sicherungselementes gehalten ist, wobei sich die Wälzrolle an einer Brücke der Scheibenbremse abstützt, die zur Aufnahme des Sicherungselementes einen in Schwenkrichtung des Bremshebels verlaufenden kreisbogenförmigen Schlitz aufweist.

Aus der KR 2013 0135203 A ist eine Scheibenbremse bekannt, mit zwei abständig zueinander angeordneten, achsgleich verlaufenden Wälzrollenabschnitten, an deren einem Ende jeweils ein Sprengring gehalten ist, der in einer kreisbogenförmigen Nut des Bremshebels einliegt. Das andere Ende der Wälzrollenabschnitte ist jeweils in einem Lagerbock gehalten, der ein Wälzlager aufnimmt, wobei die Lagerböcke einen Sattelkopf bilden.

Der Erfindung liegt die Aufgabe zugrunde, eine Scheibenbremse sowie einen Bremssattel der gattungsgemäßen Art so weiterzuentwickeln, dass mit geringem konstruktivem und fertigungstechnischem Aufwand die Funktions- und Betriebssicherheit der Scheibenbremse verbessert wird.

Diese Aufgabe wird durch eine Scheibenbremse mit den Merkmalen des Anspruchs 1, den Gegenstand des nebengeordneten Anspruchs 13 sowie einen Bremssattel mit den Merkmalen des Anspruchs 14 gelöst.

Durch die Erfindung wird nun gewährleistet, dass der Bremshebel dauerhaft eine definierte Position einnimmt, d.h., eine Verschiebung quer zur Schwenkrichtung ist ausgeschlossen.

Naturgemäß bewirkt diese Zwangsführung, dass keine Beeinträchtigungen im Betriebsverhalten der Zuspanneinrichtung insgesamt mehr auftreten, was eine deutliche Verbesserung der Funktionssicherheit darstellt.

Insbesondere wird die Brücke nicht mehr insofern belastet, als es keine seitlichen Verkantungen geben kann, die auf eine entsprechende unkontrollierte Bewegung des Bremshebels zurückzuführen wären. Damit einher geht eine deutliche Erhöhung der Standzeit der beteiligten Bauteile.

Da die Hebelsicherung sehr nah am Drehzentrum des Hebels gelagert ist, wird eine gute Hysterese begünstigt. Dabei ist lediglich das erfindungsgemäße Sicherungselement als zusätzliches Bauteil anzubringen, während die übrigen Funktionsteile in der bekannten Form einsetzbar sind, lediglich insoweit modifiziert, als eine entsprechende Ausgestaltung für die Aufnahme des Sicherungselementes vorgesehen sein muss.

Hierzu sind sowohl im Bremshebel wie auch in der Aufnahme des Sattelkopfes zur Lagerung des Schwenkkörpers jeweils ein Schlitz vorgesehen, in die das Sicherungselement eingreift. Denkbar ist auch, die Aufnahme in mindestens einem Lagerbock vorzusehen, der als separates Bauteil mit der Wandung des Bremssattels verbunden ist, wobei dann der Schlitz in den Lagerbock eingebracht ist. Bei zwei nebeneinander angeordneten Lagerböcken kann der Schlitz durch einen gewählten Abstand zwischen den beiden Lagerböcken ausgebildet sein.

Dieses Sicherungselement kann als Scheibe, Passfeder oder als Ringscheibe ausgebildet sein, die in die daran angepassten Schlitze eingreift, wobei nach einer Ausführungsvariante die Ringscheibe an dem als Wälzrolle ausgebildeten Schwenkkörper befestigt ist und nach einer anderen Variante in einen den Schwenkkörper bildenden an den Bremshebel angeformten Wulst eingelassen ist, wobei diese Scheibe jeweils in den Schlitz des Sattelkopfes bzw. des Bremshebels ragt.

Die Scheibe, die auch eine von der Kreisform abweichende Form aufweisen kann, ist sehr einfach herstellbar und insbesondere dann, wenn sie aus einem gehärteten Stahl besteht, sehr verschleißarm.

Statt eines separaten Sicherungselementes kann dies stift- oder scheibenförmig an den Wulst oder die Wälzrolle angeformt sein.

Die sich gegenüberliegenden Schlitze sind bevorzugt in ihrem Verlauf kreisbogenförmig, wobei der gedachte Drehpunkt dem des Schwenkkörpers bzw. der Aufnahme entspricht.

Damit ist eine sehr einfache Bearbeitung des Sattelkopfes möglich, da lediglich durch die seitliche Bearbeitungsöffnung des Bremssattels ein Scheibenfräser eingefügt werden muss.

Die Dimensionierung sowohl der Aufnahme, d.h. deren Krümmungsradius wie auch des Krümmungsradiuses des Schlitzes kann relativ klein gehalten werden, so dass auch die seitliche Bearbeitungsöffnung, daran angepasst, in ihrem Durchmesser entsprechend gering gehalten sein kann.

Dies dient vor allem der Stabilität des Bremssattels, da die Bearbeitungsöffnung prinzipiell eine Festigkeitsschwächung bildet, die so auf ein akzeptables Maß reduziert wird.

Im Übrigen sind das Sicherungselement und die Ausnehmungen im Sattelkopf und Bremshebel, d.h. die besagten Schlitze, in ihrer Breite bzw. Dicke so dimensioniert, dass das Sicherungselement zwar weitgehend spielfrei einliegt, jedoch problemlos und leicht eingesetzt werden kann.

Im Übrigen können bei Bedarf mehrere Sicherungselemente vorgesehen sein.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben. Es zeigen:
- Figur 1: einen Teil einer erfindungsgemäßen Scheibenbremse in einer teilweise geschnittenen perspektivischen Ansicht

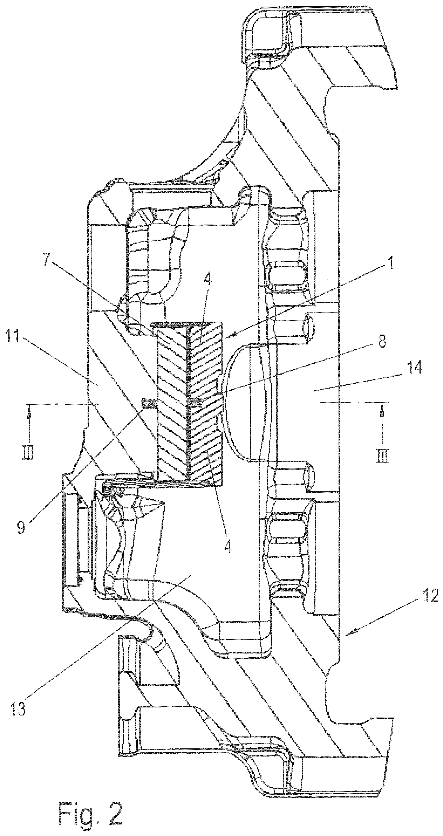

- Figur 2: eine geschnittene Draufsicht auf den Teil nach Figur 1
- Figur 3: einen Schnitt durch die Scheibenbremse gemäß der Linie III-III in Figur 2
- Figur 4: eine Einzelheit der erfindungsgemäßen Scheibenbremse in einer schematischen, perspektivischen Ansicht
- Figur 5: ein weiteres Ausführungsbeispiel der Erfindung, entsprechend der Darstellung in Figur 4.

In den Figuren ist als Teil einer Zuspanneinrichtung einer Axial-Scheibenbremse ein Bremshebel 1 erkennbar, der einen Hebelarm 2 und einen sich daran anschließenden Exzenter 4 aufweist. Dabei ragt der sich quer zur Zuspannrichtung erstreckende Hebelarm 2 in einen angeformten Dom 15 eines gegossenen Bremssattels 12.

An dem dem Exzenter 4 abgewandten Ende ist der Hebelarm 2 mit einer kalottenförmigen Mulde 3 versehen, in die ein nicht dargestellter Stößel eines Bremszylinders, der vorzugsweise pneumatisch betätigbar ist, eingreift.

Der Exzenter 4 liegt an einer gleichfalls nicht abgebildeten Brücke an, die verschiebbar in einer Aufnahmekammer 13 des Bremssattels 12 gelagert ist und die mindestens einen Bremsstempel trägt, der im Fall einer Bremsung gegen eine Bremsbacke pressbar ist, wozu der Bremshebel 1 verschwenkbar ist, so dass der Hub des Exzenters 4 den Verschiebeweg der Brücke bestimmt.

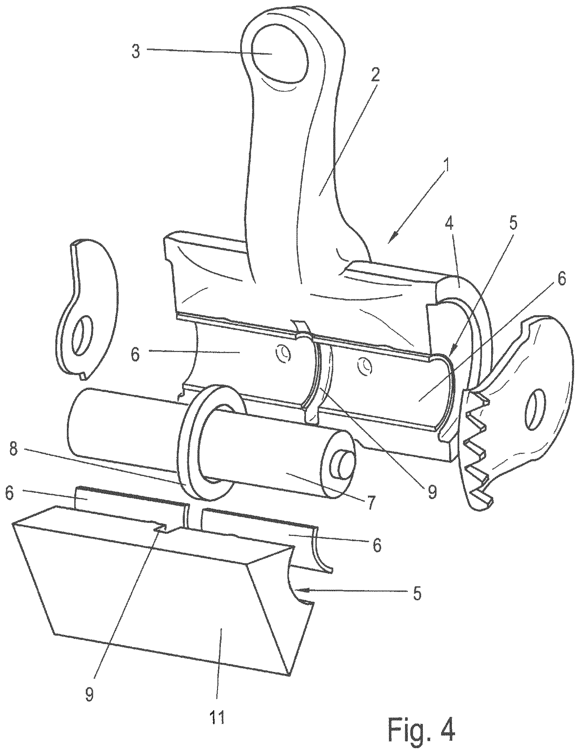

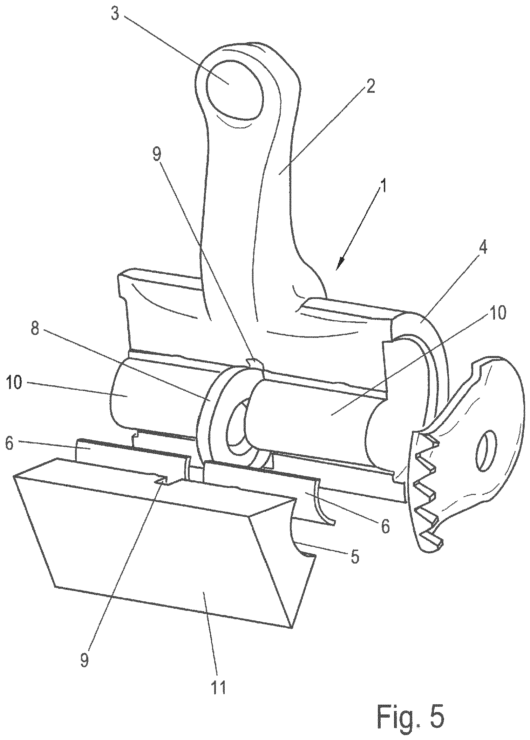

Andererseits stützt sich der Bremshebel 1 an einem durch die Innenseite einer Wand des Bremssattels 12 gebildeten Sattelkopf 11 ab, der die Aufnahmekammer 13 begrenzt und demgegenüber eine Montageöffnung 14 vorgesehen ist, durch die Funktionsteile, wie die Brücke und der Bremshebel 1 in die Aufnahmekammer 13 schiebbar sind. In den Figuren 4 und 5 ist der Sattelkopf 11 lediglich schematisch angedeutet.

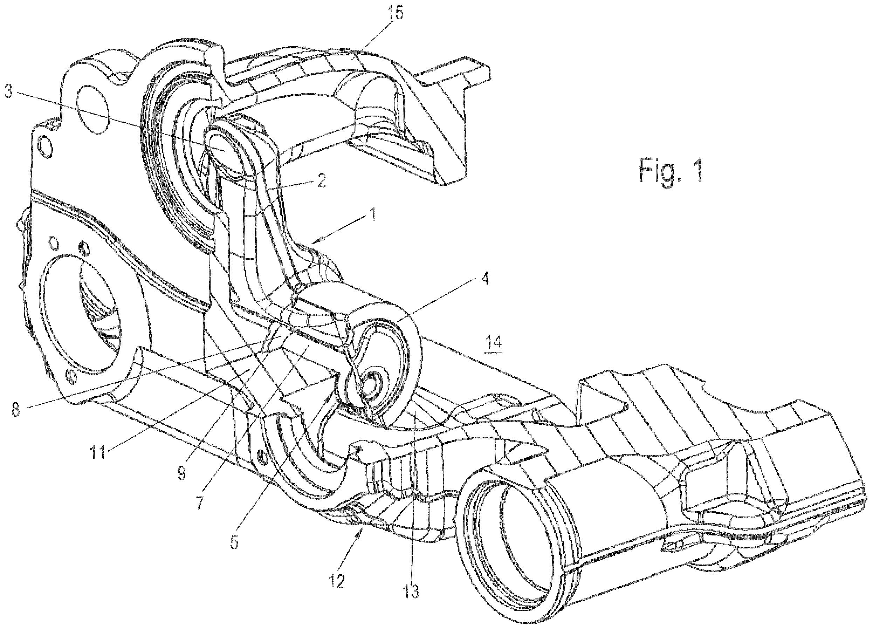

Im Anlagebereich des Bremshebels 1 am Sattelkopf 11 ist ein als Gleitlagerung ausgebildetes Schwenklager vorgesehen, mit einer im Querschnitt kreisbogenförmigen Aufnahme 5 im Sattelkopf 11 sowie einem Schwenkkörper, der im Ausführungsbeispiel gemäß Figur 1 und 4 aus einer Wälzrolle 7 besteht. Bei dieser Variante liegt die Wälzrolle 7 dem Sattelkopf 11 gegenüber in einer Aufnahme 5 des Bremshebels 1, die ebenso wie die Aufnahme 5 des Sattelkopfes 8 mit Lagerschalen 6 ausgekleidet ist, die so beschaffen sind, dass lediglich eine geringe Gleitreibung beim Verschwenken entsteht.

Gemäß der Erfindung ist zur Verschiebesicherung des Bremshebels 1 zwischen diesem und dem Sattelkopf 11 ein Sicherungselement vorgesehen, das einerseits in den Bremshebel 1 und andererseits in den Sattelkopf 11 formschlüssig eingreift. Dabei ist das Sicherungselement im Bereich des sich beidseitig dazu axial erstreckenden Schwenkkörpers angeordnet, und steht gegenüber diesem zumindest bereichsweise radial vor.

In den Beispielen ist das Sicherungselement als Ringscheibe 8 ausgebildet, die auf der Wälzrolle 7 gelagert ist und die in Schlitze 9 eingreift, die, ebenso wie die Aufnahmen 5, kreisbogenförmig gestaltet sind, wobei die Aufnahmen 5, der Wälzrolle 7, die Schlitze 9 und die Ringscheibe 8 jeweils den selben Mittelpunkt besitzen.

Der Radius der Schlitze 9 entspricht bevorzugt dem Außenradius der Ringscheibe 8, kann jedoch auch geringfügig größer sein. Die Dicke der Ringscheibe 8 und die Breite der Schlitze 9 sind jedoch in etwa gleich.

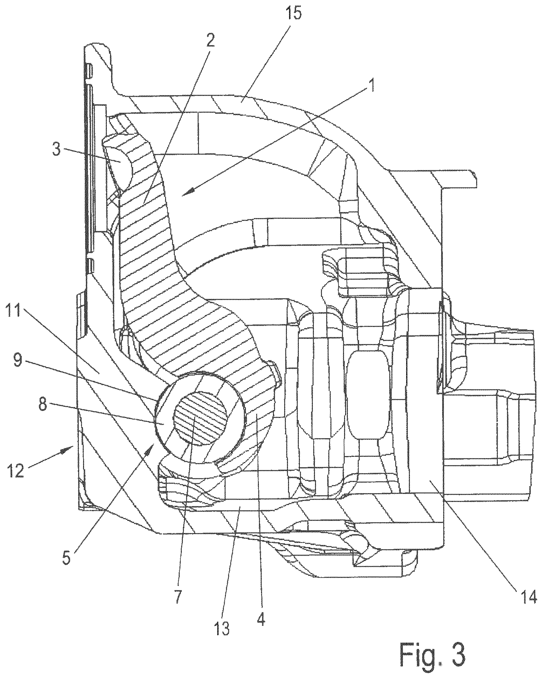

Insbesondere in den Figuren 1 und 3 ist deutlich zu erkennen, dass der bremssattelseitige Schlitz 9 in die Innenseite der Wand des Bremssattels eingelassen ist, die der Montageöffnung 14 gegenüberliegt, wobei sich der Schlitz 9 in Schwenkrichtung, also hin zum Dom 15 erstreckt. Im Übrigen wird die Montageöffnung 14 nach erfolgter Montage der Funktionsteile durch einen Verschlussdeckel verschlossen, wie aus dem Stand der Technik bekannt.

Im Beispiel nach Figur 4 ist die Ringscheibe 8 lediglich auf die Wälzrolle 7 aufgeschoben, ohne sie daran zu befestigen. Denkbar ist aber auch, die Ringscheibe 8 mit der Wälzrolle 7 fest zu verbinden. Bevorzugt ist die Ringscheibe 8 mit einer Spielpassung auf der Wälzrolle 7 geführt.

Im Gegensatz zur Variante nach Figur 4 ist bei dem in der Figur 5 gezeigten Ausführungsbeispiel der Schwenkkörper als ein im Querschnitt kreisbogenförmig ausgebildeter und an den Bremshebel 1 angeformter Wulst 10 gestaltet, der sich ebenfalls quer zur Schwenkrichtung erstreckt, wobei der Schlitz 9 durch diesen Wulst 10 geführt ist, bis in den angrenzenden Bereich des Bremshebels 1.

Anstelle einer Ringscheibe 8 kann das Sicherungselement radial vorstehend in den sattelkopfseitigen Schlitz 9 eingreifend an den Wulst 10 angeformt sein.

Wie erwähnt, kann das Sicherungselement auch in einer anderen Formgebung als die Ringscheibe 8 vorliegen. Entscheidend ist, dass der Bremshebel 1 und der Sattelkopf 11 quer zur Schwenkrichtung des Bremshebels 1 in einer formschlüssigen Verbindung zueinander stehen.

## Patentansprüche

1. Scheibenbremse für ein Nutzfahrzeug, mit einem eine Bremsscheibe umfassenden Bremssattel (12) mit einer Aufnahmekammer (13), in der eine Zuspanneinrichtung angeordnet ist mit einem schwenkbaren Bremshebel (1), der sich einerseits an einer mindestens einen Bremsstempel tragenden Brücke und andererseits an einer einen Sattelkopf (11) bildenden Wand des Bremssattels (12) abstützt, wobei zur Lagerung des Bremshebels (1) am Sattelkopf (11) ein Schwenklager vorgesehen ist, mit einer im Querschnitt kreisbogenförmigen Aufnahme (5) und einem darin einliegenden und relativ dazu verschwenkbaren Schwenkkörper, wobei der Bremshebel (1) durch mindestens ein Sicherungselement quer zur Schwenkrichtung des Bremshebels (1) verschiebegesichert gehalten ist, **gekennzeichnet durch** die Anordnung des Sicherungselementes im Bereich des sich beidseitig dazu axial erstreckenden Schwenkkörpers, wobei das Sicherungselement gegenüber dem Schwenkkörper zumindest bereichsweise radial vorsteht und in in Schwenkrichtung des Bremshebels (1) kreisbogenförmige Schlitze (9) des Bremshebels (1) und des Sattelkopfes (11) formschlüssig eingreift.

2. Scheibenbremse nach 1, **dadurch gekennzeichnet, dass** das Sicherungselement aus einer Scheibe beliebiger Kontur, insbesondere einer Ringscheibe (8), oder einer Passfeder gebildet ist, die in Schlitze (9) des Bremshebels (1) und des Sattelkopfes (8) eingreift.

3. Scheibenbremse nach Anspruch 2, **dadurch gekennzeichnet, dass** bei Ausbildung des Schwenkkörpers als Wälzrolle (7), die in einer Aufnahme (5) des Bremshebels (1) und der Aufnahme (5) des Sattelkopfes (11) einliegt, die Ringscheibe (8) auf der Wälzrolle (7) geführt ist.

4. Scheibenbremse nach einem der Ansprüche 2 oder 3, **dadurch gekennzeichnet, dass** die Ringscheibe (8) lose oder fest an der Wälzrolle (7) gehalten ist.

5. Scheibenbremse nach einem der vorhergehenden Ansprüche, **dadurch gekennzeichnet, dass** das Sicherungselement, insbesondere als Scheibe, wie Ringscheibe (8), ausgebildet, bei Ausbildung des Schwenkkörpers als ein sich quer zur Schwenkrichtung des Bremshebels (1) erstreckender angeformter Wulst (10), mit einem kreisbogenförmigen Querschnitt durch den Wulst (10) geführt ist.

6. Scheibenbremse nach einem der vorhergehenden Ansprüche, **dadurch gekennzeichnet, dass** das Sicherungselement an den angeformten Wulst (10) angeformt ist.

7. Scheibenbremse nach einem der vorhergehenden Ansprüche, **dadurch gekennzeichnet, dass** der Bremshebel (1) und der Sattelkopf (11) auf ihren einander zugewandten Seiten jeweils einen Schlitz (9) aufweisen, in denen das Sicherungselement einliegt.

8. Scheibenbremse nach einem der vorhergehenden Ansprüche, **dadurch gekennzeichnet, dass** der Sattelkopf (11) mindestens einen mit der Aufnahme (5) versehenen Lagerbock aufweist, in den der Schlitz (8) eingebracht ist und/oder der Sattelkopf (11) zwei nebeneinander angeordnete Lagerböcke aufweist, wobei der Schlitz (9) durch den Abstand der beiden Lagerböcke zueinander gebildet ist.

9. Scheibenbremse nach einem der vorhergehenden Ansprüche, **dadurch gekennzeichnet, dass** die Schlitze (9) kreisbogenförmig verlaufen, wobei die Drehachse des Schwenkkörpers, der Aufnahmen (5) und der Schlitze (9) identisch ist.

10. Scheibenbremse nach einem der Ansprüche 2 bis 9, **dadurch gekennzeichnet, dass** die Ringscheibe (8) in ihrer Dicke in einem Toleranzbereich der Breite der Schlitze (9) entspricht.

11. Scheibenbremse nach einem der vorhergehenden Ansprüche, **dadurch gekennzeichnet, dass** der Krümmungsradius der Schlitze (9) zumindest dem äußeren Radius der Ringscheibe (8) entspricht.

12. Scheibenbremse nach einem der Ansprüche 2 bis 11, **dadurch gekennzeichnet, dass** die Ringscheibe (8) aus gehärtetem Stahl besteht.

13. Scheibenbremse für ein Nutzfahrzeug, mit einem eine Bremsscheibe umfassenden Bremssattel, in dem eine Zuspanneinrichtung angeordnet ist, die einen schwenkbaren Bremshebel (1) aufweist, der sich einerseits an einer mindestens einen Bremsstempel tragenden Brücke und andererseits an einem Sattelkopf (11) des Bremssattels abstützt, wobei zur Lagerung des Bremshebels (1) am Sattelkopf (11) ein Schwenklager vorgesehen ist, mit einer im Querschnitt kreisbogenförmigen Aufnahme (5) und einem darin einliegenden und relativ dazu verschwenkbaren Schwenkkörper, wobei der Bremshebel (1) durch mindestens ein Sicherungselement quer zur Schwenkrichtung des Bremshebels (1) verschiebegesichert gehalten ist, **dadurch gekennzeichnet, dass** das Sicherungselement aus einer Scheibe beliebiger Kontur, insbesondere einer Ringscheibe (8) oder einer Passfeder gebildet ist, die in Schlitze (9) des Bremshebels (1) und des Sattelkopfes (11) eingreift, wobei bei Ausbildung des Schwenkkörpers als Wälzrolle (7), die in einer Aufnahme (5) des Bremshebels (1) und der Aufnahme (5) des Sattelkopfes (11) einliegt, die Ringscheibe (8) auf der Wälzrolle (7) geführt ist.

14. Bremssattel einer Scheibenbremse nach einem der Ansprüche 1 bis 13, mit einem eine Montageöffnung (14) aufweisenden Aufnahmeraum (13), an den sich ein angeformter Dom (15) anschließt, wobei der Aufnahmeraum (13) auf seiner der Montageöffnung (14) gegenüberliegenden Seite durch eine einen Sattelkopf (11) bildende Wand begrenzt ist, **dadurch gekennzeichnet, dass** die dem Aufnahmeraum (13) zugewandte Innenseite des Sattelkopfes (11) mindestens einen sich in Richtung des Domes (15) erstreckenden Schlitz (9) aufweist.

15. Bremssattel nach Anspruch 14, **dadurch gekennzeichnet, dass** der Schlitz (9) kreisbogenförmig verläuft.

## Claims

1. Disc brake for a commercial vehicle, having a brake calliper (12) which engages around a brake disc and which has a receiving chamber (13), in which receiving chamber there is arranged an application device with a pivotable brake lever (1), which brake lever is supported at one side on a bridge, which bears at least one brake plunger, and at the other side on a wall, which forms a calliper head (11), of the brake calliper (12), wherein, for mounting the brake lever (1) on the calliper head (11), there is provided a pivot bearing with a receptacle (5) of circular-arc-shape in cross section and with a pivoting body which lies in and is pivotable relative to said receptacle, wherein the brake lever (1) is held by means of at least one securing element so as to be secured against displacement transversely with respect to the pivoting direction of the brake lever (1), **characterised by** the arrangement of the securing element in the region of the pivoting body which extends axially to both sides of said securing element, wherein the securing element at least regionally protrudes radially relative to the pivoting body and positively engages with slots (9) of the brake lever (1) and the calliper head (11), which slots are of circular-arc shape in a pivoting direction of the brake lever (1).

2. Disc brake according to claim 1, **characterised in that** the securing element is formed from a disc of any desired contour, in particular from an annular disc (8), or from a parallel key which engages with slots (9) of the brake lever (1) and of the calliper head (8).

3. Disc brake according to claim 2, **characterised in that** in the case of the pivoting body being in the form of a roller (7) which lies in a receptacle (5) of the brake lever (1) and in the receptacle (5) of the calliper head (11), the annular disc (8) is guided on the roller (7).

4. Disc brake according to claim 2 or, **characterised in that** the annular disc (8) is held loosely or fixedly on the roller (7).

5. Disc brake according to any of the preceding claims, **characterised in that,** in the case of the pivoting body being formed as an integrally formed bead (10) extending transversely with respect to the pivoting direction of the brake lever (1), the securing element, in particular in the form of a disc such as an annular disc (8), is guided with a circular-arc shaped cross section by the bead (10).

6. Disc brake according to any of the preceding claims, **characterised in that** the securing element is integrally formed on the integrally formed bead (10).

7. Disc brake according to any of the preceding claims, **characterised in that** the brake lever (1) and the calliper head (11) have, on their sides facing toward one another, in each case one slot (9) in which the securing element lies.

8. Disc brake according to any of the preceding claims, **characterised in that** the calliper head (11) has at least one bearing block which is equipped with the receptacle (5) and into which the slot (8) is formed, and/or **in that** the calliper head (11) has two mutually adjacently arranged bearing blocks, wherein the slot (9) is formed by the spacing of the two bearing blocks to one another.

9. Disc brake according to any of the preceding claims, **characterised in that** the slots (9) run in circular-arc fashion, wherein the axis of rotation of the pivoting body, of the receptacles (5) and of the slots (9) is identical.

10. Disc brake according to any of claims 2 to 9, **characterised in that** the annular disc (8) corresponds in terms of its thickness, within a tolerance range, to the width of the slots (9).

11. Disc brake according to any of the preceding claims, **characterised in that** the radius of curvature of the slots (9) corresponds at least to the outer radius of the annular disc (8).

12. Disc brake according to any of claims 2 to 11, **characterised in that** the annular disc (8) is composed of hardened steel.

13. Disc brake for a commercial vehicle, having a brake calliper which engages around a brake disc and in which there is arranged a brake-application device which has a pivotable brake lever (1), which brake lever is supported at one side on a bridge, which bears at least one brake plunger, and at the other side on a calliper head (11) of the brake calliper, wherein, for the mounting of the brake lever (1) on the calliper head (11), there is provided a pivot bearing with a receptacle (5) of circular-arc shape in cross-section and with a pivoting body which lies in and is pivotable relative to said receptacle, wherein the brake lever (1) is held by means of at least one securing element so as to be secured against displacement transversely with respect to the pivoting direction of the brake lever (1), **characterised in that** the securing element is formed from a disc of any desired contour, in particular from an annular disc (8), or from a parallel key which engages with slots (9) of the brake lever (1) and of the calliper head (11), wherein, in the case of the pivoting body being in the form of a roller (7) which lies in a receptacle (5) of the brake lever (1) and in the receptacle (5) of the calliper head (11), the annular disc (8) is guided on the roller (7).

14. Brake calliper of a disc brake according to any of claims 1 to 13, having a receiving space (13) which has an installation opening (14) and which is adjoined by an integrally formed dome (15), wherein the receiving space (13) is delimited, on its side situated opposite the installation opening (14), by a wall which forms a calliper head (11), **characterised in that** the inner side, facing toward the receiving space (13), of the calliper head (11) has at least one slot (9) extending in the direction of the dome (15).

15. Brake calliper according to claim 14, **characterised in that** the slot (9) extends in a circular arc.

## Revendications

1. Frein à disque d'un véhicule utilitaire, ayant un étrier (12) de frein comprenant un disque de frein, et ayant une chambre (13) de réception, dans laquelle est disposé un dispositif de serrage ayant un levier (1) de frein pivotant, qui s'appuie, d'une part, sur au moins pontet portant un poinçon de frein et, d'autre part, sur une paroi, formant une tête (11) d'étrier, de l'étrier (12) de frein, dans lequel il est prévu pour le montage du levier (1) de frein sur la tête (11) de l'étrier (1) un palier pivotant, comprenant un logement (5) en forme d'arc de cercle en section transversale et un corps pivotant qui y est inséré et qui peut pivoter relativement à celui-ci, dans lequel le levier (1) de frein est maintenu par au moins un élément de sécurité sans pouvoir coulisser transversalement à la direction de pivotement du levier (1) de frein, **caractérisé en ce que** l'élément de sécurité est mis dans la partie du corps pivotant s'étendant axialement des deux côtés, l'élément de sécurité étant en saillie au moins radialement, au moins par endroit, par rapport au corps pivotant et pénétrant à complémentarité de forme dans des fentes (9), en forme d'arc de cercle dans la direction de pivotement du levier (1) de frein, du levier (1) de frein et de la tête (11) de l'étrier.

2. Frein à disque suivant la revendication 1, **caractérisé en ce que** l'élément de sécurité est formé d'un disque de contour quelconque, notamment d'un disque (8) annulaire, ou d'une clavette qui pénètre dans des fentes (9) du levier (1) de frein et de la tête (8) de l'étrier.

3. Frein à disque suivant la revendication 2, **caractérisé en ce que**, lorsque le corps pivotant est constitué sous la forme d'un rouleau (7) de roulement, qui vient dans un logement (5) du levier (1) de frein et dans le logement (5) de la tête (11) de l'étrier, le disque (8) annulaire est guidé sur le rouleau (7) de roulement.

4. Frein à disque suivant l'une des revendications 2 ou 3, **caractérisé en ce que** le disque (8) annulaire est maintenu de manière lâche ou fixe sur le rouleau (7) de roulement.

5. Frein à disque suivant l'une des revendications précédentes, **caractérisé en ce que** l'élément de sécurité constitué, notamment sous la forme d'un disque, comme un disque (8) annulaire, est, lorsque le corps pivotant est constitué sous la forme d'un bourrelet (10) venu de matière s'étendant transversalement à la direction de pivotement du levier (1) de frein, guidé par une section transversale en forme d'arc de cercle par le bourrelet (10).

6. Frein à disque suivant l'une des revendications précédentes, **caractérisé en ce que** l'élément de sécurité vient de matière avec le bourrelet (10) qui vient de matière.

7. Frein à disque suivant l'une des revendications précédentes, **caractérisé en ce que** le levier (1) de frein et la tête (11) de l'étrier ont, de leur côté tourné l'un vers l'autre, une fente (9) dans lesquelles vient l'élément de sécurité.

8. Frein à disque suivant l'une des revendications précédentes, **caractérisé en ce que** la tête (11) de l'étrier a au moins un support qui est pourvu d'un logement (5) et dans lequel la fente (8) est introduite et/ou la tête (11) de l'étrier a deux supports disposés l'un à côté de l'autre, la fente (9) étant formée par la distance entre les deux supports l'un par rapport à l'autre.

9. Frein à disque suivant l'une des revendications précédentes, **caractérisé en ce que** les fentes (9) s'étendent en forme d'arc de cercle, l'axe de pivotement du corps pivotant du logement (5) et des fentes (9) étant le même.

10. Frein à disque suivant l'une des revendications 2 à 9, **caractérisé en ce que** le disque (8) annulaire correspond dans son épaisseur dans une plage de tolérance à la largeur des fentes (9).

11. Frein à disque suivant l'une des revendications précédentes, **caractérisé en ce que** le rayon de courbure des fentes (9) correspond au moins au rayon extérieur du disque (8) annulaire.

12. Frein à disque suivant l'une des revendications 2 à 11, **caractérisé en ce que** le disque (8) annulaire est en acier trempé.

13. Frein à disque d'un véhicule utilitaire, ayant un étrier (12) de frein comprenant un disque de frein, et ayant une chambre (13) de réception, dans laquelle est disposé un dispositif de serrage ayant un levier (1) de frein pivotant, qui s'appuie, d'une part, sur au moins pontet portant un poinçon de frein et, d'autre part, sur une paroi, formant une tête (11) d'étrier, de l'étrier (12) de frein, dans lequel il est prévu, pour le montage du levier (1) de frein sur la tête (11) de l'étrier (1) un palier pivotant, comprenant un logement (5) en forme d'arc de cercle en section transversale et un corps pivotant qui y est inséré et qui peut pivoter relativement à celui-ci, dans lequel le levier (1) de frein est maintenu par au moins un élément de sécurité sans pouvoir coulisser transversalement à la direction de pivotement du levier (1) de frein, **caractérisé en ce que** l'élément de sécurité est formé d'un disque de contour quelconque, notamment d'un disque (8) annulaire ou d'une clavette, qui pénètre dans des fentes (9) du levier (1) de frein et de la tête (11) de l'étrier, dans lequel, lorsque le corps pivotant est constitué sous la forme d'un rouleau (7) de roulement, qui entre dans un logement (5) du levier (1) de frein et dans le logement (5) de la tête (11) de l'étrier, le disque (8) annulaire est guidé sur le rouleau (7) de roulement.

14. Etrier de frein à disque suivant l'une des revendications 1 à 13, comprenant un espace (13) de réception ayant une ouverture (14) de montage, espace auquel se raccorde en dôme (15) venu de matière, l'espace (13) de réception étant délimité du côté opposé à l'ouverture (14) de montage par une paroi formant une tête (11) de l'étrier, **caractérisé en ce que** le côté intérieur, tourné vers l'espace (13) de réception, de la tête (11) de l'étrier a au moins une fente (9) s'étendant dans la direction du dôme (15).

15. Etrier de frein suivant la revendication 14, **caractérisé en ce que** la fente (9) s'étend en forme d'arc de cercle.
